# EUROPÄISCHE PATENTANMELDUNG

(11) **EP 0 899 046 A1**
(43) Veröffentlichungstag der Anmeldung: **03.03.1999**
(21) Anmeldenummer: 98116042.7
(22) Anmeldetag: 25.08.1998
(51) Int. Cl.: B23B 29/12

(54) **Werkzeughalter für Werkzeugmaschinen**

(30) Priorität: 27.08.1997 DE 29715361 U
(71) Anmelder: Albert Klopfer GmbH, 71272 Renningen (DE)
(72) Erfinder: Klopfer, Otto, 71272 Renningen (DE)
(74) Vertreter: Thul, Stephan

(57) **Zusammenfassung**

Werkzeughalter für Werkzeugmaschinen, insbesondere für Drehmaschinen, mit einem drehbar an einer Werkzeugmaschine anbringbaren Grundkörper (1) und wenigstens einer am Umfang des Grundkörpers (1) angeordneten Befestigungsvorrichtung (5, 7, 9) zur Fixierung von Werkzeugen (6, 14) an dem Grundkörper (1), wobei der Grundkörper (1) gegenüber der Werkzeugmaschine manuell gedreht und durch eine Verriegelungseinrichtung (3) in verschiedenen Stellungen fixiert werden kann, um die an dem Grundkörper (1) fixierten Werkzeuge (6, 14) in ihre Arbeitsposition zu bringen, wobei wenigstens eine Befestigungsvorrichtung (9) als Normaufnahme mit hoher Wiederholgenauigkeit, insbesondere als sogenannte VDI-Aufnahme, ausgebildet ist, wobei außerdem zur Erzielung der hohen Wiederholgenauigkeit der Normaufnahme auch bei anderen, insbesondere bereits vorhandenen Befestigungsvorrichtungen, ein Adapterelement (13) vorgesehen ist, welches einerseits ein in die Normaufnahme (9) einsetzbares Halteteil (15) und andererseits eine von der Normaufnahme (9) abweichende Werkzeugaufnahme (16) aufweist, in welche ein Werkzeug (14) mit insbesondere geringerer Wiederholgenauigkeit einspannbar ist als in die Normaufnahme (9).

## Beschreibung

Die vorliegende Erfindung betrifft einen Werkzeughalter für Werkzeugmaschinen, insbesondere für Drehmaschinen, mit einem drehbar an einer Werkzeugmaschine anbringbaren Grundkörper und wenigstens einer am Umfang des Grundkörpers angeordneten Befestigungsvorrichtung zur Fixierung von Werkzeugen an dem Grundkörper, wobei der Grundkörper gegenüber der Werkzeugmaschine manuell gedreht und durch eine Verriegelungseinrichtung in verschiedenen Stellungen fixiert werden kann, um die an dem Grundkörper fixierten Werkzeuge in ihre Arbeitsposition zu bringen, wobei wenigstens eine Befestigungsvorrichtung als Normaufnahme mit hoher Wiederholgenauigkeit, insbesondere als sogenannte VDI-Aufnahme, ausgebildet ist.

Derartige handbetätigte Werkzeughalter werden in der Praxis in Verbindung mit konventionellen oder halbautomatischen Werkzeugmaschinen insbesondere bei der Herstellung von Kleinserien verwendet, um an einem Werkstück in einer Einstellung nacheinander Bearbeitungen mit unterschiedlichen Werkzeugen ausführen zu können, ohne vor jedem Arbeitsgang in den Werkzeughalter ein neues Werkzeug einspannen zu müssen.

Von den Benutzern derartiger Werkzeughalter werden immer größere Anforderungen an die Wiederholgenauigkeit der Werkzeugaufnahme gestellt. Diese werden vor allem durch sogenannte VDI-Aufnahmen erfüllt, insbesondere nach DIN 69881 mit Schwalbenschwanznut oder nach DIN 69880 mit Runschaftaufnahme, die eine Wiederholgenauigkeit in der Größenordnung von 0,005 mm gewährleisten. Die hohe Wiederholgenauigkeit wird dabei durch die schwalbenschwanzförmige Ausgestaltung der VDI-Aufnahme nach DIN 69881 in Verbindung mit einer Führungsnut und einem Anschlag bzw. durch die Aufnahmebohrung hoher Genauigkeit bei der Rundschaftaufnahme nach DIN 69880 in Verbindung mit einer Verdrehsicherung erreicht.

Nachteilig hierbei ist, daß die Werkzeuge ein entsprechend schwalbenschwanzförmiges Halteteil bzw. einen entsprechenden Rundschaft aufweisen müssen, um in die VDI-Aufnahme eingesetzt werden zu können, und daß daher vorhandene Werkzeuge anderer Systeme nicht in Verbindung mit einer VDI-Aufnahme verwendet werden können.

Der Erfindung liegt die Aufgabe zugrunde, diesen Nachteil zu beheben. Insbesondere soll die hohe Wiederholgenauigkeit einer VDI-Aufnahme auch für bereits vorhandene Werkzeuge mit andersartigem Aufnahmeteil zur Verfügung gestellt werden.

Diese Aufgabe wird dadurch gelöst, daß ein Adapterelement vorgesehen ist, welches einerseits ein in die Normaufnahme einsetzbares Halteteil und andererseits eine von der Normaufnahme abweichende Werkzeugaufnahme aufweist, in welche ein Werkzeug mit insbesondere geringerer Wiederholgenauigkeit einspannbar ist als in die Normaufnahme.

Durch das Adapterelement können vorhandene Werkzeuge mit einem nicht der Normaufnahme entsprechenden Halteteil in die VDI-Aufnahme eingesetzt werden. Hierfür ist die Werkzeugaufnahme des Adapterelementes entsprechend dem Halteteil des vorhandenen Werkzeugs und der Halteteil reziprok zur VDI-Aufnahme ausgebildet. Zur Fixierung eines Werkzeuges wird das Adapterelement mit seinem Halteteil in die VDI-Aufnahme und das vorhandene Werkzeug mit dessen Halteteil in die entsprechend ausgebildete Aufnahme des Adapterelements eingesetzt. Das vorhandene Werkzeug wird dann zusammen mit dem Adapterelement ausgetauscht, so daß die Wiederholgenauigkeit derjenigen der VDI-Aufnahme entspricht.

Der erfindungsgemäße Werkzeughalter ermöglicht also die Weiterverwendung vorhandener Werkzeuge und gleichzeitig die Ausnutzung der hohen Wiederholgenauigkeit von Normaufnahmen wie sogenannte VDI-Aufnahmen nach DIN 69880 oder DIN 69881. Die Investitionskosten für die Umrüstung auf einen Werkzeughalter mit hoher Wiederholgenauigkeit werden dadurch vorteilhafterweise verringert. Gleichzeitig wird durch die kurze Werkzeugwechselzeit die Bearbeitung auch komplizierter Konturen in einer Aufspannung möglich.

Nach einer Ausgestaltung der Erfindung weist die Werkzeugaufnahme des Adapterelements einen insbesondere konvex nach außen ausgebildeten Bogenabschnitt mit Außenverzahnung auf, welcher reziprok zu einer in dem einzusetzenden Werkzeug vorgesehenen, insbesondere konkav ausgebildeten, Bogenausnehmung mit Verzahnung ausgebildet ist, wobei Mittel vorgesehen sind, durch welche ein Werkzeug mit seiner Bogenausnehmung gegen den Bogenabschnitt des Adapterelements spannbar ist. Gemäß dieser Ausgestaltung ist das Adapterelement in Anlehnung an ei nen sogenannten Wechselfix-Werkzeughalter ausgebildet, wobei allerdings lediglich der Aufnahme- und Spannteil des Werkzeughalters übernommen wurde. Alle auf dem Wechselfix-Werkzeughalter verwendbaren Werkzeuge können somit auch auf dem erfindungsgemäßen Werkzeughalter verwendet werden, wobei zugleich die Wiederholgenauigkeit auf die einer VDI-Aufnahme angehoben ist.

Die Werkzeugaufnahme des Adapterelements ist bevorzugt mit zwei Spannbolzen ausgestattet, die in entsprechende Aufnahmen eines Werkzeugs formschlüssig einsetzbar und zum Einspannen und Lösen des Werkzeugs relativ zum Adapterelement beweglich sind. Diese Ausgestaltung ermöglicht eine einfache und sichere Festlegung der Werkzeuge am Adapterelement und damit am Werkzeughalter.

Nach einer weiteren Ausgestaltung der Erfindung sind die beiden Sparinbolzen durch eine gemeinsame Betätigungseinrichtung bewegbar. Bevorzugt ist es dabei, wenn durch die gemeinsame Betätigungseinrichtung eine voneinander abhängige Bewegung der Spannbolzen bewirkt wird. Hierdurch wird eine gleichmäßige Einspannung des Werkzeuges am Adapterelement sichergestellt.

Durch Verwendung eines Außensechskants zur Betätigung der Spannbolzen, der insbesondere mit dem Außensechskant der Spannelemente einer herkömmlichen Stahlaufnahme übereinstimmt, ist eine Betätigung mit bereits vorhandenen Mitteln in einfacher Weise möglich.

Nach einer weiteren Ausgestaltung der Erfindung weist der Grundkörper Quaderform mit vieleckiger, insbesondere quadratischer Grundfläche auf, an dessen Umfangsseiten die Befestigungsvorrichtungen mit Werkzeugaufnahme zur Fixierung von Werkzeugen angeordnet sind. Diese Ausgestaltung ermöglicht in geschickter Weise die Verwendung mehrerer Aufnahmevorrichtungen an einem Werkzeughalter, um so die Werkzeuge in den Werkzeugaufnahmen nacheinander zur Bearbeitung eines Werkstükkes einsetzen zu können. Insbesondere sind zusätzlich zu der Normaufnahme eine Schnellwechselaufnahme und eine Stahlaufnahme vorgesehen. Dadurch können Werkzeuge vielfältiger Art mit dem erfindungsgemäßen Werkzeughalter benutzt werden.

Eine Ausgestaltung der Erfindung ist in der Zeichnung dargestellt und wird nachfolgend beschrieben. Es zeigen, jeweils in schematischer Darstellung,
- Figur 1: eine perspektivische Ansicht eines Werkzeughalters mit VDI-Aufnahme,
- Figur 2: eine Draufsicht auf ein erfindungsgemäßes Adapterelement mit aufgenommenem Werkzeug und
- Figur 3: eine Seitenansicht des Adapterelements mit Werkzeug von Figur 2.

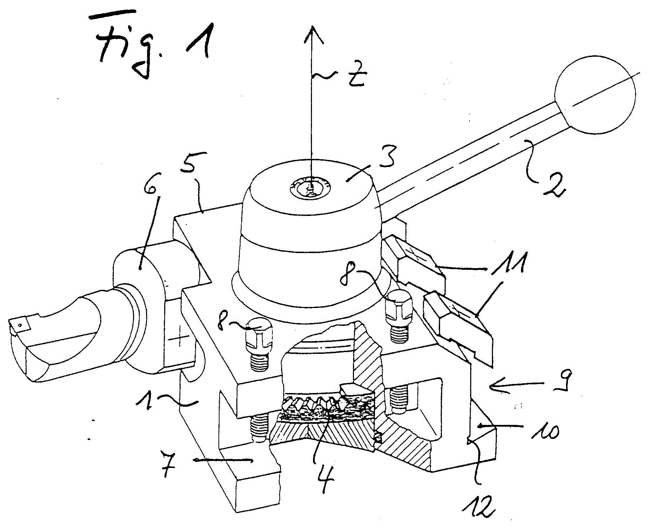

Der in Figur 1 gezeigte Werkzeughalter umfaßt einen drehbar an einer Werkzeugmaschine anbringbaren Grundkörper 1, der als Quader mit einer in etwa quadratischen Grundfläche ausgebildet ist. Der Grundkörper 1 ist an der Werkzeugmaschine um eine vertikale Achse Z drehbar gelagert und kann über den Hebel 2 manuell verdreht werden. Über eine lösbare Verriegelungseinrichtung 3 mit Stirnverzahnung 4 sind die Drehstellungen vorgegeben, in welchen der Werkzeughalter gegenüber der Werkzeugmaschine arretierbar ist.

In den Umfangsseiten des Grundkörpers 1 sind drei Befestigungsvorrichtungen mit Werkzeugaufnahme zur Fixierung von Werkzeugen vorhanden, nämlich eine Schnellwechselaufnahme 5, die hier mit eingespanntem Werkzeug 6 dargestellt ist, eine Stahlaufnahme 7 in Form einer Rechtecknut, in welche ein Vierkantschaft eines Werkzeuges eingelegt, ausgerichtet und über die Spannschrauben 8 fixiert werden kann, sowie eine sogenannte VDI-Aufnahme 9 mit genormter 55°-Schwalbenschwariznut 10 nach DIN 69881, in welcher ein schwalbenschwanzförmiger Halteteil eines Werkzeuges über die Einspannelemente 11 fixierbar ist. Zusätzlich weist die VDI-Aufnahme 9 einen hier nicht dargestellten Anschlag und eine Führungsnut 12 auf, um die Ausrichtung der Werkzeuge in der VDI-Aufnahme 9 zu erleichtern.

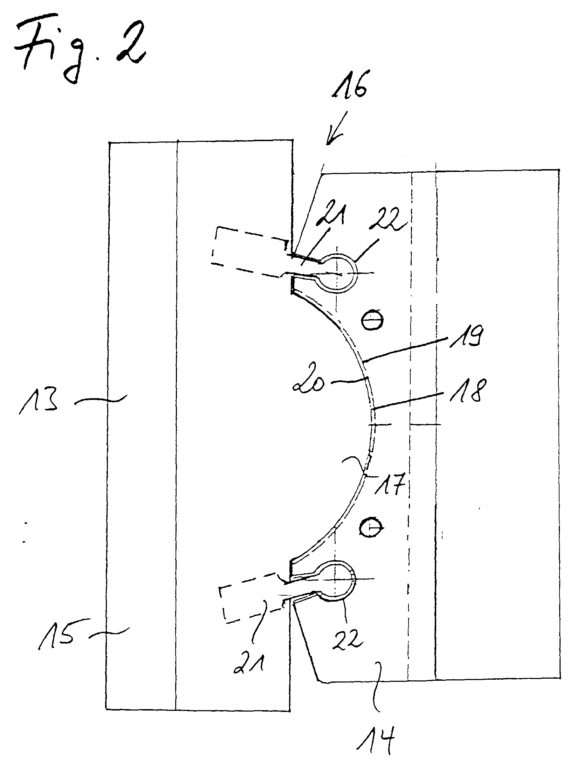

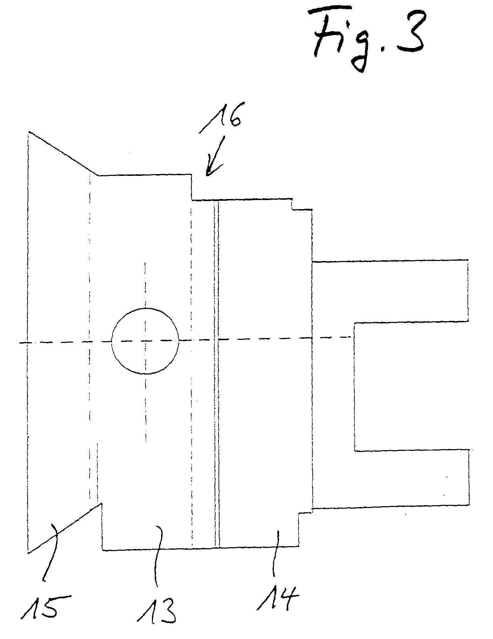

Die Figuren 2 und 3 zeigen ein erfindungsgemäßes Adapterelement 13 mit einem von diesem gehaltenen Werkzeug 14. Das Adapterlement 13 umfaßt einen schwalbenschwanzförmigen Halteteil 15, dessen Form reziprok zur VDI-Aufnahme 9 ausgebildet ist. Auf der von dem Halteteil 15 abgewandten Seite ist an dem Adapterelement 13 eine Werkzeugaufnahme 16 für das Werkzeug 14 vorgesehen. Die Werkzeugaufnahme 16 umfaßt einen konvex nach außen bogenförmig ausgebildeten Abschnitt 17, der auf seiner Bogenaußenseite mit einer Verzahnung 18 versehen ist, deren Zähne in Bogenrichtung hintereinander angeordnet sind. Bogenabschnitt 17 und Verzahnung 18 sind reziprok zu einer bogenförmigen Ausnehmung 19 mit Verzahnung 20 ausgebildet, die am Werkzeug 14 vorgesehen ist. Somit können die Verzahnungen 18 und 20 formschlüssig miteinander in Eingriff treten.

Desweiteren umfaßt die Werkzeugaufnahme 16 seitlich zu dem Bogenabschnitt 17 zwei vorstehende Bolzen 21, die in am Werkzeug 14 vorhandene reziproke Ausnehmungen 22 formschlüssig eingreifen. Die Bolzen 21 sind mit hier nicht dargestellten Mitteln relativ zum Adapterelement 13 derart beweglich, daß das Werkzeug 14 gegen das Adapterelement 13 unter Eingriffnahme der Verzahnungen 18 und 20 gespannt und durch umgekehrte Bewegung wieder gelöst werden kann. Die Bewegung der beiden Bolzen 21 erfolgt dabei bevorzugt über eine gemeinsame Betätigungsvorrichtung und in Abhängigkeit voneinander, so daß eine gleichmäßige Einspannung des Werkzeuges 14 am Adapterelement 13 gewährleistet ist.

Werkzeuge 14 mit bogenförmiger Ausnehmung 19 und Verzahnung 20, die in sogenannten Wechselfixsystemen verwendet werden, können mit Hilfe des erfindungsgemäßen Adapterelementes 13 in die VDI-Aufnahme 9 des Werkzeughalters eingesetzt werden. Vorhandene Werkzeuge des Wechselfixsystems können somit auch mit Werkzeughaltern mit VDI-Aufnahme verwendet werden, die eine hohe Wiederholgenauigkeit, insbesondere von ca. 0,005 mm aufweisen. Vorhandene Werkzeuge können also weiterverwendet werden, wenn auf Werkzeughalter mit VDI-Aufnahme umgestellt werden soll. Es ist lediglich erforderlich, erfindungsgemäße Adapterelemente mit den Werkzeugen zu verbinden.

Grundsätzlich können auch nur zwei, aber auch vier oder mehr Aufnahmen am Grundkörper 1 vorhanden sein Außerdem kann anstelle einer VDI-Aufnahme mit Schwalbenschwanznut nach DIN 69881 insbesondere auch eine Rundschaftaufnahme nach DIN 69880 verwendet werden.

### Bezugszeichenliste

- 1: Grundkörper
- 2: Betätigungshebel
- 3: Verriegelungseinrichtung
- 4: Stirnverzahnung
- 5: Schnellwechselaufnahme
- 6: Werkzeug
- 7: Stahlaufnahme
- 8: Spannschraube
- 9: VDI-Aufnahme
- 10: 60°-Schwalbenschwanznut
- 11: Spannelement
- 12: Führungsnut
- 13: Adapterelement
- 14: Werkzeug
- 15: Halteteil
- 16: Werkzeugaufnahme
- 17: Bogenabschnitt
- 18: Verzahnung
- 19: Bogenausnehmung
- 20: Verzahnung
- 21: Bolzen
- 22: Ausnehmung
- Z: Drehachse

## Patentansprüche

1. Werkzeughalter für Werkzeugmaschinen, insbesondere für Drehmaschinen, mit einem drehbar an einer Werkzeugmaschine anbringbaren Grundkörper (1) und wenigstens einer am Umfang des Grundkörpers (1) angeordneten Befestigungsvorrichtung (5, 7, 9) zur Fixierung von Werkzeugen (6, 14) an dem Grundkörper (1), wobei der Grundkörper (1) gegenüber der Werkzeugmaschine manuell gedreht und durch eine Verriegelungseinrichtung (3) in verschiedenen Stellungen fixiert werden kann, um die an dem Grundkörper (1) fixierten Werkzeuge (6, 14) in ihre Arbeitsposition zu bringen, wobei wenigstens eine Befestigungsvorrichtung (9) als Normaufnahme mit hoher Wiederholgenauigkeit, insbesondere als sogenannte VDI-Aufnahme, ausgebildet ist,
dadurch **gekennzeichnet,**
daß ein Adapterelement (13) vorgesehen ist, welches einerseits ein in die Normaufnahme (9) einsetzbares Halteteil (15) und andererseits eine von der Normaufnahme (9) abweichende Werkzeugaufnahme (16) aufweist, in welche ein Werkzeug (14) mit insbesondere geringerer Wiederholgenauigkeit einspannbar ist als in die Normaufnahme (9).

2. Werkzeughalter nach Anspruch 1,
dadurch **gekennzeichnet,**
daß die Werkzeugaufnahme (16) des Adapterelements (13) einen insbesondere konvex nach außen ausgebildeten Bogenabschnitt (17) mit Außenverzahnung (18) aufweist, welcher reziprok zu einer in dem einzusetzenden Werkzeug (14) vorgesehenen, insbesondere konkav ausgebildeten Bogenausnehmung (19) mit Verzahnung (20) ausgebildet ist, und daß Mittel (21, 22) vorgesehen sind, durch welche ein Werkzeug (14) mit seiner Bogenausnehmung (19) gegen den Bogenabschnitt (17) des Adapterlements (13) spannbar ist.

3. Werkzeughalter nach Anspruch 2,
dadurch **gekennzeichnet,**
daß die Werkzeugaufnahme (16) des Adapterelements (13) zwei Spannbolzen (21) aufweist, die in entsprechende Ausnehmungen (22) eines Werkzeugs (14) formschlüssig einsetzbar und zum Einspannen und Lösen des Werkzeugs (14) relativ zum Adapterelement (13) beweglich sind.

4. Werkzeughalter nach Anspruch 3,
dadurch **gekennzeichnet,**
daß die beiden Spannbolzen (21) durch eine gemeinsame Betätigungseinrichtung bewegbar sind.

5. Werkzeughalter nach Anspruch 4,
dadurch **gekennzeichnet,**
daß durch die gemeinsame Betätigungseinrichtung eine voneinander abhängige Bewegung der Spannbolzen (21) bewirkt wird.

6. Werkzeughalter nach einem der Ansprüche 1 bis 5,
dadurch **gekennzeichnet,**
daß die Betätigung der Spannbolzen (21) über einen Außensechskant erfolgt, der insbesondere mit dem Außensechskant der Spannelemente (11) einer herkömmlichen Stahlaufnahme (7) übereinstimmt.

7. Werkzeughalter nach einem der vorhergehenden Ansprüche,
dadurch **gekennzeichnet,**
daß der Grundkörper (1) Quaderform mit vieleckiger, insbesondere quadratischer Grundfläche besitzt, an dessen Umfangsseiten die Befestigungsvorrichtungen (5, 7, 9) mit Werkzeugaufnahme zur Fixierung von Werkzeugen (6, 14) angeordnet sind.

8. Werkzeughalter nach einem der vorhergehenden Ansprüche,
dadurch **gekennzeichnet,**
daß zusätzlich zu der Normaufnahme (9) eine Schnellwechselaufnahme (5) und eine Stahlaufnahme (7) vorgesehen sind.

9. Adapterelement (13) mit einem in eine Normaufnahme, insbesondere sogenannte VDI-Aufnahme (9), eines Werkzeughalters für Werkzeugmaschinen einsetzbaren Halteteil (15) und einer von der Normaufnahme (9) abweichenden Werkzeugaufnahme (16), in welche ein Werkzeug (14) mit insbesondere geringerer Wiederholgenauigkeit einspannbar ist als in die Normaufnahme (9).
